# EUROPÄISCHE PATENTSCHRIFT

(11) **EP 4 137 387 B1**
(45) Veröffentlichungstag und Bekanntmachung des Hinweises auf die Patenterteilung: **21.01.2026**
(21) Anmeldenummer: 22189376.1
(22) Anmeldetag: 09.08.2022
(51) Int. Cl.: B62D 15/02, B62D 5/00

(54) **VERFAHREN ZU EINER LENKGETRIEBE-LENKRAD-POSITIONSSYNCHRONISATION IN EINEM STEER-BY-WIRE-FAHRZEUG MIT EINER ENTSPRECHENDEN LENKRAD-ARCHITEKTUR**
METHOD FOR A STEERING MECHANISM-STEERING WHEEL POSITION SYNCHRONIZATION IN A STEER-BY-WIRE VEHICLE WITH A CORRESPONDING STEERING WHEEL ARCHITECTURE
PROCÉDÉ DE SYNCHRONISATION DE LA POSITION DU VOLANT DE DIRECTION ET DU LEVIER DE DIRECTION DANS UN VÉHICULE À COMMANDE PAR CÂBLE DANS UNE ARCHITECTURE DE VOLANT DE DIRECTION CORRESPONDANTE

(30) Priorität: 12.08.2021 DE 102021208838
(43) Veröffentlichungstag der Anmeldung: 22.02.2023
(73) Patentinhaber: VOLKSWAGEN AG, 38440 Wolfsburg (DE)
(72) Erfinder: Fricke, Julian, 31241 Ilsede (DE); Sachs, Tobias, 38176 Wendeburg (DE); Rüger, Tobias, 38108 Braunschweig (DE)

(56) Entgegenhaltungen:
- DE-A1- 10 258 871
- DE-A1- 10 331 700
- DE-A1- 102017 220 158
- US-A1- 2016 375 770
- US-B1- 8 666 601

## Beschreibung

### Technisches Gebiet

Die Erfindung betrifft ein Verfahren zu einer Lenkgetriebe-Lenkrad-Positionssynchronisation in einem Steer-by-Wire-Fahrzeug. Es kann sich insbesondere um ein Kraftfahrzeug, aber auch ein andersartiges Land-, Luft- oder Wasserfahrzeug handeln. Es besitzt ein vom Lenkgetriebe mechanisch entkoppeltes Lenkrad sowie einen Force-Feedback-Aktuator zur künstlichen Erzeugung eines Handmoments, welches bei einer manuellen Lenkung durch den Fahrer eine Rückmeldung vom Lenkgetriebe an das Lenkrad wiedergibt. Eine Positionssynchronisation des Lenkrads mit dem Lenkgetriebe (d. h. mit der aktuellen Position der gelenkten Räder im Falle eines Kraftfahrzeugs) wird in einem solchen Fahrzeug beispielsweise bei einer Übergabe der Lenkung an den Fahrer nach einem automatisierten Fahrt- oder Parkregime benötigt, bei dem die Lenkwinkelstellung des Lenkrads deren Bezug zum Lenkgetriebe verloren hat, etwa, weil das Lenkrad stillstand.

### Technischer Hintergrund

Aktuell verfügen Kraftfahrzeuge meist über eine Wickelfeder, welche die elektrische Verbindung zwischen einem im Fahrzeug feststehenden Lenksäulenmodul und dem diesbezüglich rotierenden Lenkrad herstellt. Die Wickelfeder ermöglicht beispielsweise die Kommunikation mit den Multifunktionstasten im Lenkrad, die Erkennung der Betätigung des Signalhorns oder auch die elektrische Energieversorgung verschiedener im Lenkrad integrierter elektrischer Verbraucher, wie z. B. der Beleuchtung oder Hinterleuchtung der Lenkradtasten, der Lenkradheizung, der im Lenkrad eingebauten Airbag-Sprengkapsel oder eines als kapazitiver Sensor für die Hands-Off-Erkennung aufgebauten Lenkrads.

In herkömmlichen Kraftfahrzeugen ist das Lenkrad meist mechanisch mit einem Lenkgetriebe für die gelenkten Räder verbunden, beispielsweise über eine drehfest mit dem Lenkrad verbundene Lenkradwelle, eine über ein Kardangelenk damit verbundene Lenkzwischenwelle und ein Ritzel mit der Zahnstange, die die Lenkradstellung an die Spurstangen der Räder weitergibt. Die Wickelfeder ist bei diesem Fahrzeugaufbau vor Überdrehen und Reißen dadurch geschützt, dass die Lenkradbewegung in einem bestimmten Winkel durch einen mechanischen Endanschlag im Lenkgetriebe (in diesem Fall der Zahnstange) unterbunden wird.

Es sind sogenannte Steer-by-Wire-Lenksysteme für Fahrzeuge bekannt, welche zukünftig im Automobilbereich in Großserie eingesetzt werden können. Diese verfügen über keine mechanische Verbindung zwischen Lenkrad und Lenkgetriebe bzw. den gelenkten Rädern. Das Handmoment, welches die Rückmeldung der Straße und der Reifen an das Lenkrad wiedergibt, wird bei Steer-by-Wire-Fahrzeugen künstlich mittels einer elektrischen Antriebseinheit, die als Force-Feedback-Aktuator (FFA) bezeichnet wird, erzeugt.

Wird bei Steer-by-Wire-Fahrzeugen eine drahtlose Energie- und Signalübertragung zwischen dem feststehenden Fahrzeugaufbau (wie einem Lenksäulenmodul) und dem diesbezüglich rotierenden Fahrerinterface (Lenkrad) etabliert, kann die Wickelfeder entfallen, wie beispielsweise aus DE 102 58 871 A1 bekannt. Damit wird auch ein nicht-überlenkbarer Endanschlag überflüssig und es entfällt der Zwang, nur eine feste Anzahl an Lenkraddrehungen zuzulassen, bevor die Wickelfeder reißen würde.

Bei einem anderen bekannten Ansatz wird eine Wickelfeder gar nicht erst benötigt, weil diejenigen Teile des Lenkrades, die eine Energieversorgung benötigen und mit dem Rest des Fahrzeuges kommunizieren, fest stehen bleiben (in der nicht rotierenden Lenkradmitte). Auch eine Synchronisation der Positionen von Lenkrad und gelenkten Rädern wird in diesem Fall nicht benötigt, wenn der rotierende Lenkradkranz vollständig rotationssymmetrisch ist. Allerdings muss hierfür eine neuartige Lenkradarchitektur entwickelt und gefertigt werden. Ein weiterer Nachteil ist, dass es bei diesem Ansatz keine mit dem Lenkrad mitrotierenden Tasten/Steuerelemente geben kann. Dadurch verändert sich die Position der Fahrerhand zu den zu bedienenden Lenkradtasten mit jeder Lenkbewegung. Mitrotierende Tasten würden hingegen sicherstellen, dass sie sich immer in Griffweite des Daumens befinden.

Zu einer Positionssynchronisation des Lenkrads beim Überführen eines Steer-by-Wire-Fahrzeugs vom automatisierten Fahren zum nicht-automatisierten Fahren schlägt beispielsweise DE 10 2017 220 158 A1 vor, entweder das Lenkrad an den aktuellen Radwinkel des Fahrzeugs anzupassen oder, umgekehrt, den Radwinkel und die Ist-Lenkungsstellelementposition an den aktuellen Lenkradwinkel anzupassen.

Die Druckschrift DE 103 31 700A1 offenbart ein Steer-by-Wire System in einem Lenksystem eines Fahrzeugs. Das Steer-by-Wire System weist auf: einen Sensor zur Bestimmung des Lenkradwinkels, der eingerichtet ist, die Winkelposition eines Lenkrads zu bestimmen, einen Drehmoment-Antrieb, der eingerichtet ist, um ein Rückkopplungs-Drehmoment auf das Lenkrad auszuüben; und eine Steuerung, die einen Auslenkungs-Winkel des Rades auf der Straße empfängt und weiterhin mit dem Sensor für den Lenkradwinkel zusammenarbeitet, um einen Lenkradwinkel zu ermitteln; wobei die Steuerung die Position des Lenkrads relativ zum Winkel des Rades auf der Straße korrigiert, indem sie einen korrigierten Lenkradwinkel relativ zu mindestens einem Winkel des Rades auf der Straße berechnet und den Drehmoment-Rückkopplungs-Antrieb so ansteuert, dass dieser das Lenkrad in die korrigierte Lenkrad-Winkelposition stellt; und wobei die Steuerung eine minimale Winkel-Auslenkung ermittelt, durch die das Lenkrad in die korrigierte Lenkwinkel-Position gedreht wird.

Es ist Aufgabe der vorliegenden Erfindung, ein alternatives oder verbessertes Verfahren zu einer Lenkgetriebe-Lenkrad-Positionssynchronisation in einem Steer-by-Wire-Fahrzeug, insbesondere zu einer Räder-Lenkrad-Positionssynchronisation in einem Kraftfahrzeug, bereitzustellen. Die Erfindung richtet sich dabei insbesondere auch auf eine entsprechende Lenkrad-Architektur und unter anderem auch darauf, dass sie gegenüber den herkömmlichen Fahrzeugen möglichst wenig verändert zu werden braucht.

### Offenbarung der Erfindung

Diese Aufgabe wird durch ein Verfahren zu einer Lenkgetriebe-Lenkrad-Positionssynchronisation in einem Steer-by-Wire-Fahrzeug gemäß Anspruch 1 sowie durch ein entsprechendes Computerprogramm, eine entsprechend eingerichtete Steuerungseinheit, ein entsprechendes Steer-by-Wire-Lenksystem und ein damit ausgestattetes Fahrzeug gemäß den nebengeordneten Ansprüchen gelöst. Weitere Ausgestaltungen sind in den abhängigen Ansprüchen angegeben. Alle in den Ansprüchen und der Beschreibung für das Verfahren genannten weiterführenden Merkmale und Wirkungen gelten auch in Bezug auf das Lenksystem und das Fahrzeug, wie auch umgekehrt.

Gemäß einem ersten Aspekt ist ein Verfahren zu einer Lenkgetriebe-Lenkrad-Positionssynchronisation in einem Steer-by-Wire-Fahrzeug vorgesehen. Das Fahrzeug weist ein von einem Lenkgetriebe mechanisch entkoppeltes Lenkrad auf, das beliebig oft um seine Achse drehbar ist. Es wird also unter anderem vorausgesetzt, dass keine Wickelfeder das Lenkrad mit feststehenden Fahrzeugkomponenten, in denen es gelagert ist, wie einem Lenksäulenmodul etc., verbindet. Zur Erzeugung eines Handmoments, welches eine Rückmeldung vom Lenkgetriebe an das Lenkrad bei der manuellen Lenkung durch den Fahrer wiedergibt, weist das Fahrzeug einen Force-Feedback-Aktuator auf.

Beim Fahrzeug kann es sich insbesondere um ein Kraftfahrzeug, aber auch um ein beliebiges anderes Land-, Luft- oder Wasserfahrzeug handeln. Als Lenkgetriebe kann jede mechanische Einrichtung verstanden werden, die ausgebildet ist zum Verstellen bzw. Drehen von Fahrzeugkomponenten, welche die Fortbewegungsrichtung des Fahrzeugs bestimmen. Im Fall eines Kraftfahrzeugs bewirkt das Lenkgetriebe das jeweils gewünschte Einschlagen der Fahrzeugräder.

Das Verfahren umfasst dabei folgende Schritte:

### Schritt 1:

Erhalten einer Aufforderung zu einer Lenkgetriebe-Lenkrad-Positionssynchronisation nach einem automatisierten Fahrt- oder Parkregime, bei dem das Lenkrad dem Lenkgetriebe nicht nachgeführt wurde. Diese Aufforderung kann beispielsweise im Fahrzeug automatisch erzeugt werden, wenn eine unmittelbar bevorstehende Übergabe der Lenkung an den Fahrer erkannt wird oder von der Fahrzeugsteuerung initiiert wird. Auch andere Fälle sind möglich.

### Schritt 2:

Bereitstellen aktueller Werte einer dem Lenkgetriebe entsprechenden Lenkwinkelstellung des Lenkrads einerseits und einer tatsächlichen Lenkwinkelstellung des Lenkrads andererseits und Ermitteln einer Differenz dieser Werte. Mit anderen Worten wird dabei die tatsächliche Lenkwinkelstellung des Lenkrads von einer Lenkwinkelstellung abgezogen, welche der aktuellen Position des Lenkgetriebes bzw. der gelenkten Räder bei manueller Fahrzeugsteuerung entsprechen würde.

### Schritt 3:

Bestimmen einer zur Lenkgetriebe-Lenkrad-Positionssynchronisation auszuführenden Lenkraddrehung aus der im Schritt 2 ermittelten Differenz unter Berücksichtigung einer Periodizität mit einer vorbestimmten Lenkwinkelperiode, die einer vollen Lenkradumdrehung oder deren Bruchteil (also weniger als einer Umdrehung) entspricht. Mit anderen Worten wird in diesem Schritt die vorbestimmte Lenkwinkelperiode von der ermittelten Differenz abgezogen, falls diese beispielsweise eine oder mehrere Lenkwinkelperioden umfasst. Anschließend wird die so bestimmte Lenkraddrehung ausgeführt, beispielsweise bevor oder während die Lenkung des Fahrzeugs an den Fahrer übergeben wird.

Am Beispiel eines Kraftfahrzeugs ausgedrückt, beschreibt die vorliegende Erfindung eine Möglichkeit, durch den Entfall jeglicher mechanischer Verbindung zwischen Lenkrad und Lenkgetriebe eine optimierte Synchronisation zwischen Lenkradposition und aktueller Position der Räder nach vorheriger Entkopplung durchzuführen. (Beispiele für eine hierfür geeignete Lenkradarchitektur werden weiter unten angegeben. Alles, was hierin am Beispiel eines Kraftfahrzeugs erläutert wird, gilt sinngemäß auch für jedes andere Fahrzeug.) Während der autonomen Fahrt oder während des autonomen Parkens kann das Lenkrad von der Bewegung der Räder entkoppelt werden, um beispielsweise in die Instrumententafel versenkt zu werden. Muss der Fahrer nun übernehmen (beispielsweise aufgrund eines unvorhergesehenen Ereignisses), während die Räder eingelenkt sind, muss sich das Lenkrad mit der Position der Räder synchronisieren. Bei großen Lenkwinkeln der Räder (z. B. beim Ausparken, Abbiegen, etc.) bedeutet das selbst bei heute üblichen Progressivlenkungen eine zu überbrückende Winkeldifferenz von mehr als einer Lenkradumdrehung.

Eine Idee der vorliegenden Erfindung besteht darin, dass ohne eine mechanische Verbindung zum Lenkgetriebe und ohne eine zu schützende Wickelfeder das Lenkrad nicht mehr eindeutig auf die Position der Räder ausgerichtet werden muss, sondern nur 360°-periodisch und bei einer n-fachen Rotationssymmetrie sogar nur 360°/n-periodisch. Eine weiterführende Idee besteht hierbei darin, dass die Lenkraddrehung zu seiner Positionssynchronisation nach einem vorherigen Bezugsverlust zu der aktuellen Radposition sogar entgegen der Richtung der eingeschlagenen Räder erfolgen kann, wie die nachfolgende Ausführungsform zeigt:
Gemäß einer Ausführungsform wird bei der Bestimmung der zur Lenkgetriebe-Lenkrad-Positionssynchronisation auszuführenden Lenkraddrehung die vorbestimmte Lenkwinkelperiode so oft von der oben genannten Differenz abgezogen, bis zwei mögliche Lenkraddrehungen mit einem Betrag innerhalb der vorbestimmten Lenkwinkelperiode und mit unterschiedlichem Drehsinn ermittelt sind. Anschließend wird von diesen zwei möglichen Lenkraddrehungen diejenige ausgewählt, die den kleineren Betrag hat. Diese Lenkraddrehung wird als die auszuführende Lenkraddrehung bestimmt und anschließend auch ausgeführt.

Dadurch ergibt sich bei der Lenkwinkelsynchronisation eines Lenkrades eine auszuführende Lenkraddrehung von maximal 180°. Beträgt beispielsweise die ermittelte Winkeldifferenz 365°, um die das Lenkrad zu seiner Positionssynchronisierung mit den eingeschlagenen Rädern bei herkömmlichen Systemen gedreht werden müsste, muss das Lenkrad beim vorliegenden Verfahren nur eine Winkeldifferenz von 5° ausgleichen. Als weiteres Beispiel sind die Räder beispielsweise nach links gedreht, und das Lenkrad weist nach seinem Stillstand eine Lenkwinkeldifferenz von 270° zu dieser Radstellung auf, die vor der Übernahme durch den Fahrer synchronisiert werden muss. In diesem Beispiel ist es gemäß der vorliegenden Ausführungsform ausreichend, das Lenkrad um 90° nach rechts zu drehen, um eine Lenkwinkelsynchronisation zu erreichen.

Insbesondere kann beim vorliegenden Lenksystem und Verfahren das Lenkrad oder eine drehfest damit verbundene Lenkradwelle beliebig oft drehbar in einem Lenksäulenmodul gelagert sein, welches im Fahrzeug unbeweglich angeordnet (d. h. fixiert) ist und lediglich zur individuellen Anpassung an einen Fahrer in einer oder mehreren Richtungen als Ganzes verstellbar sein kann. Im Lenkrad können eine oder mehrere elektrische oder elektronische Einrichtungen integriert sein, die sich gemeinsam mit dem Lenkrad um dessen Achse drehen. Dabei ist das Fahrzeug zu einer drahtlosen Energie- und/oder Signalübertragung zwischen unbeweglichen Fahrzeugkomponenten und den im Lenkrad integrierten elektrischen/elektronischen Einrichtungen ausgebildet, sodass keine Wickelfeder benötigt wird und das Lenkrad in Bezug auf das Lenksäulenmodul beliebig gedreht werden kann. Hierzu kann das Fahrzeug beispielsweise einen geeigneten Transformator oder eine sonstige Vorrichtung zur drahtlosen Energie- und/oder Signalübertragung zwischen dem unbeweglichen Lenksäulenmodul und den im Lenkrad integrierten Einrichtungen aufweisen.

Ein geeigneter Transformator kann beispielsweise eine im Lenksäulenmodul fixierte Primärspule, eine drehfest mit der Lenkradwelle verbundene Sekundärspule sowie optional zur Erhöhung des Wirkungsgrads einen integrierten Eisenkern aus einem weichmagnetischen Material umfassen, der zumindest teilweise von der Lenkradwelle gebildet und/oder zumindest teilweise drehfest mit der Lenkradwelle verbunden ist. Um eine an Bord des Fahrzeugs zur Verfügung stehende Gleichspannung in eine transformierbare Wechselspannung umzuwandeln, kann ein der Primärspule vorgeschalteter Wechselrichter vorgesehen sein. Um die transportierte Wechselspannung in eine nutzbare Gleichspannung zu wandeln, kann ein der Sekundärspule nachgeschalteter Gleichrichter vorgesehen sein.

Die im Lenkrad integrierten elektrischen oder elektronischen Einrichtungen können beispielsweise einen oder mehrere von folgenden elektrischen Verbrauchern umfassen: eine Lenkradheizung und/oder einen anderen großen Verbraucher, der einen elektrischen Verbrauch von mindestens etwa 30 W, mindestens etwa 40 W, und insbesondere von mindestens etwa 50 W aufweist; eine oder mehrere Lenkradtasten zur Bedienung des Fahrzeugs oder eines darin integrierten Infotainment-Systems; einen kapazitiven Hands-Off-Erkennungssensor, der zum Erkennen, ob die Hände des Fahrers nicht am Lenkrad sind, ausgebildet ist; einen Airbag. Insbesondere kann im Lenkrad ein Aktuator integriert sein, der zum Auf- und Zusammenklappen des Lenkrads und/oder zu dessen Versenkung in einer Instrumententafel beim Übergang zum automatisierten Fahrtregime ausgebildet ist.

Erfindungsgemäß besitzt das Lenkrad um dessen Drehachse im Wesentlichen eine n-fache Rotationssymmetrie (auch n-zählige Dreh- oder Rotationssymmetrie genannt), sodass die oben genannte vorbestimmte Lenkwinkelperiode 360°/n beträgt, wobei n>1 eine ganze Zahl ist. Mit anderen Worten ist das Lenkrad so ausgebildet dass es nach einer Drehung um seine Achse um einen Winkel von 360°/n wieder derart auf sich selbst abgebildet wird, dass aus der Sicht des Fahrers keine (Ver-)Drehung festzustellen ist. Einige Beispiele für n=2, 3, 4 und ∞ sind in den Figuren gezeigt.

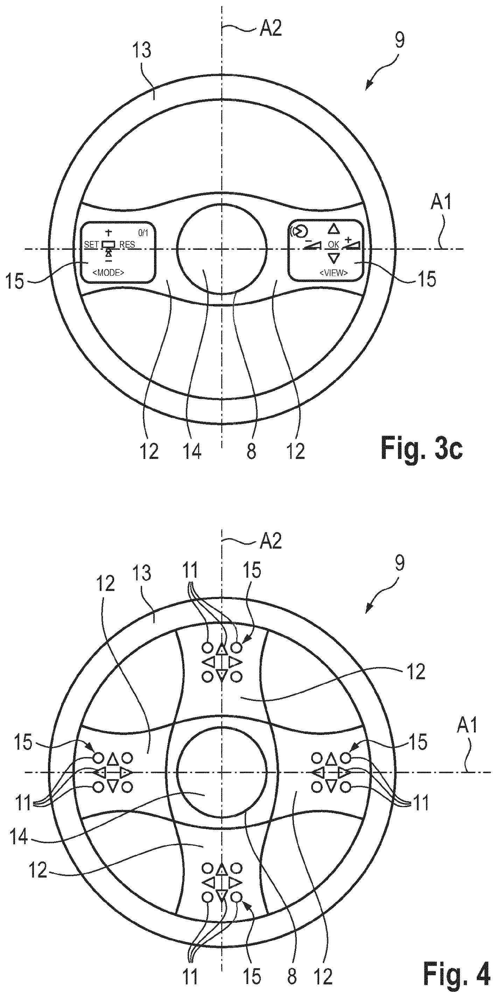

Dass das Lenkrad die genannte Lenkwinkelperiode von 360°/n bzw. die entsprechende n-fache Rotationssymmetrie nur "im Wesentlichen" aufzuweisen braucht, bedeutet, dass es vorliegend nicht auf eine geometrisch exakte Symmetrie des gesamten Lenkrads, sondern allein darauf ankommt, dass es für den Fahrer unauffällig ist, wenn das Lenkrad nach dessen Stillstand nur bis auf die genannte Periode von 360°/n den gelenkten Rädern bzw. dem Lenkgetriebe nachgeführt wird. Insbesondere braucht dabei das Lenkrad in seinen vom Fahrer verdeckten, beispielsweise rückseitigen, Bereichen keine Symmetrie/Periodizität aufzuweisen. Ferner kann bei dieser Ausführungsform das Lenkrad beispielsweise zwei oder mehr kapazitive Displays oder Touch-Screens aufweisen, deren Ausbildung und Anordnung entlang des Lenkradumfangs zum Erreichen der genannten Periodizität symmetrisch ist, während die jeweilige Anzeige auf Displays, die aus der Sicht des Fahrers beispielsweise links und/oder oben liegen, anders sein kann, als auf rechts und/oder unten liegenden Displays (vgl. Fig. 3c). Die unterschiedlichen Anzeigen dieser Displays können beispielsweise bei einer Positionssynchronisation mit einer Periode von 360°/2 = 180° durch eine entsprechend programmierte Displaysteuerung untereinander getauscht und gespiegelt werden, um dem Fahrer wieder die gewohnten Bedienelemente an derselben Position bereitzustellen. Durch den Einsatz kapazitiver Displays oder Touchscreens können daher die Freiheitsgrade bei Design und Anordnung der Multifunktionstasten deutlich erhöht werden.

Erfindungsgemäß weist das Lenkrad n untereinander (im obigen Sinne) im Wesentlichen gleich ausgebildete Lenkradtasten-Gruppen auf, die in einem Winkelabstand von jeweils 360°/n voneinander um die Lenkradachse herum angeordnet sind. Dabei ist jede einzelne Lenkradtasten-Gruppe in einer dem Fahrer zugewandten Lenkradebene spiegelsymmetrisch um zwei zueinander senkrechte Symmetrieachsen ausgebildet. Alternativ oder zusätzlich kann jede Lenkradtasten-Gruppe mindestens ein kapazitives Display oder Touchscreen umfassen, dessen als beschriftete oder unsymmetrische Lenkradtasten dienende Anzeige bei der Lenkgetriebe-Lenkrad-Positionssynchronisation abhängig von der daraus resultierenden Position des jeweiligen Displays/Touchscreens in der Lenkradebene (d. h. Position aus Sicht des Fahrers links/rechts und oben/unten bezüglich der Lenkradachse) so angepasst wird, dass eine vorgegebene Ausrichtung für links/rechts und oben/unten bezüglich der Lenkradachse angezeigte Lenkradtasten gewahrt ist.

Für die hierin vorgestellte Funktionalität müssen die Position des Lenkrades und die Position des Lenkgetriebes bzw. der Räder unabhängig voneinander bekannt sein. Das ist in Steer-by-Wire-Fahrzeugen beispielsweise dadurch gegeben, dass sowohl das Lenkgetriebe als auch das Lenkrad jeweils über einen Elektromotor (wie Servomotor oder Force-Feedback-Aktuator) verfügen und damit über einen inhärenten Rotorpositionssensor, mit dem sich diese Positionen identifizieren lassen. Beispielsweise kann beim vorliegenden Verfahren also der aktuelle Wert der tatsächlichen Lenkwinkelstellung des Lenkrads durch einen Rotorpositionssensor des Force-Feedback-Aktuators bereitgestellt werden, während alternativ oder zusätzlich der aktuelle Wert der dem Lenkgetriebe entsprechenden Lenkwinkelstellung des Lenkrads durch einen Rotorpositionssensor eines Servomotors bereitgestellt werden kann, der im Lenkgetriebe zur (Räder-)Lenkung eingesetzt ist.

Gemäß einem weiteren Aspekt ist ein Computerprogramm vorgesehen, umfassend Befehle, die bei der Ausführung des Computerprogramms in einer Steuerungseinheit diese veranlassen, das Verfahren der hierin dargelegten Art auszuführen. Gemäß einem weiteren Aspekt ist eine Steuerungseinheit vorgesehen, die dazu eingerichtet ist, das Verfahren nach einem der vorhergehenden Ansprüche automatisch auszuführen.

Gemäß einem weiteren Aspekt ist ein Steer-by-Wire-Lenksystem für ein Fahrzeug, insbesondere ein Kraftfahrzeug, vorgesehen, welches Lenksystem Folgendes umfasst:
- ein Lenksäulenmodul, das für eine unbewegliche Anordnung im Fahrzeug ausgelegt ist und zur individuellen Anpassung an den Fahrer in einer oder mehreren Richtungen als Ganzes verstellbar sein kann;
- ein Lenkgetriebe, das zum Verstellen oder Drehen von Fahrzeugkomponenten ausgebildet ist, welche die Fortbewegungsrichtung des Fahrzeugs bestimmen;
- eine im Lenksäulenmodul gelagerte Lenkradwelle mit einem drehfest daran befestigten Lenkrad, dessen Rotation/Drehbewegung mechanisch sowohl vom Lenkgetriebe als auch vom Lenksäulenmodul entkoppelt ist, sodass das Lenkrad beliebig oft um seine Achse (d. h. die Achse der Lenkradwelle) drehbar ist;
- einen Force-Feedback-Aktuator, der zur Erzeugung eines Handmoments, welches eine Rückmeldung von dem Lenkgetriebe an das Lenkrad wiedergibt, ausgebildet ist; sowie
- eine Steuerungseinheit der hierin dargelegten Art.

Insbesondere kann das Lenkrad dabei die hierin weiter oben, weiter unten, in den Ansprüchen und in den Figuren dargelegte Lenkradarchitektur aufweisen. Ferner kann das Lenksystem, wie weiter oben erwähnt, einen geeigneten Transformator oder eine sonstige Vorrichtung zur drahtlosen Energie- und/oder Signalübertragung zwischen dem unbeweglichen Lenksäulenmodul und im Lenkrad integrierten elektrischen und elektronischen Einrichtungen aufweisen.

Gemäß einem weiteren Aspekt ist ein Fahrzeug, insbesondere ein Kraftfahrzeug, vorgesehen. Das Fahrzeug umfasst dabei einen Fahrersitz und eine davor angeordnete Instrumententafel sowie ein Steer-by-Wire-Lenksystem der hierin dargelegten Art, dessen Lenksäulenmodul im Bereich der Instrumententafel fixiert ist. Insbesondere kann dabei das Lenksäulenmodul zur individuellen Anpassung an einen Fahrer als Ganzes verstellbar sein, beispielsweise in axialer Richtung der Lenkradwelle, um das Lenkrad an die Sitzposition des Fahrers in einer Längsrichtung des Fahrzeugs anzupassen, und/oder in vertikaler Richtung des Fahrzeugs zur Anpassung an die Sitzhöhe und Größe des Fahrers.

Insgesamt wird mit dem hierin vorgestellten Verfahren und Lenksystem die Lenkradpositionssynchronisation nach vorheriger Entkopplung der Lenkradbewegung von dem Lenkgetriebe in bestimmten Situationen deutlich vereinfacht. Die aktuelle Lenkradarchitektur muss dafür bei n=1 gar nicht, und bei n=2 nur minimal angepasst werden, wie Figuren zeigen.

### Kurzbeschreibung der Zeichnungen

Oben beschriebene Aspekte, Ausführungsformen und Ausgestaltungsvarianten der Erfindung werden nachfolgend anhand der in beigefügten Zeichnungen dargestellten Beispiele näher erläutert. Die Zeichnungen sind rein schematisch, sie sind insbesondere nicht als maßstabsgetreu zu verstehen. Gleiche oder entsprechende Elemente tragen in den Zeichnungen gleiche Bezugszeichen. Es zeigen:
- Figur 1: ein Ausführungsbeispiel eines Kraftfahrzeugs mit einem Steer-by-Wire-Lenksystem, das zum Ausführen eines Verfahrens der hierin dargelegten Art ausgebildet ist, in einem seitlichen Längsschnitt;
- Figur 2: eine Gegenüberstellung unterschiedlicher Möglichkeiten für eine n-fache Rotationssymmetrie eines Lenkrads in einem Steer-by-Wire-Lenksystem aus Fig. 1, in Draufsicht auf das Lenkrad aus Fahrersicht;
- Figur 3a-3c: unterschiedliche Beispiele für eine Lenkradarchitektur mit 2-facher Rotationssymmetrie in einem Steer-by-Wire-Lenksystem aus Fig. 1, in Draufsicht auf das Lenkrad aus Fahrersicht; und
- Figur 4: ein Beispiel für eine Lenkradarchitektur mit 4-facher Rotationssymmetrie in einem Steer-by-Wire-Lenksystem aus Fig. 1, in Draufsicht auf das Lenkrad aus Fahrersicht.

### Beschreibung von Ausführungsformen

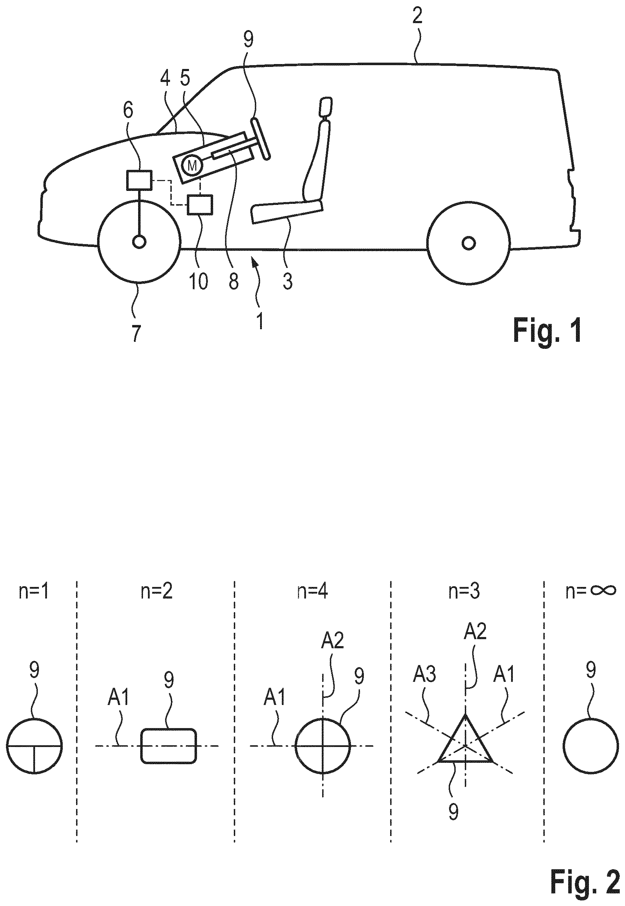

Fig. 1 zeigt in einer stark vereinfachten schematischen Längsschnittdarstellung ein Beispiel für die prinzipielle Anordnung verschiedener Komponenten eines Steer-by-Wire-Lenksystems 1 der hierin dargelegten Art in einem Fahrzeug 2 (entsprechend auch Steer-by-Wire-Fahrzeug genannt) der hierin dargelegten Art, das in diesem Beispiel ein Kraftfahrzeug ist. Das Fahrzeug 2 umfasst einen Fahrersitz 3 und eine davor angeordnete Instrumententafel 4, in deren Bereich gegenüber dem Fahrersitz 3 das Lenksystem 1 fixiert ist.

Das Lenksystem 1 umfasst ein Lenksäulenmodul 5, das für eine unbewegliche Anordnung im Fahrzeug 2 ausgelegt ist, jedoch zur individuellen Anpassung an den Fahrer in einer oder mehreren Richtungen als Ganzes verstellbar sein kann. Das Lenksystem 1 umfasst ferner ein in Fig. 1 nur schematisch angedeutetes Lenkgetriebe 6, das zum Drehen von Fahrzeugrädern 7 ausgebildet ist, um die Fortbewegungsrichtung des Fahrzeugs 2 zu ändern. Im Lenksäulenmodul 5 ist eine Lenkradwelle 8 mit einem drehfest daran befestigten Lenkrad 9 zur manuellen Lenkung des Fahrzeugs 2 durch den Fahrer gelagert. Dabei ist die Drehbewegung des Lenkrads 9 mechanisch sowohl vom Lenkgetriebe 6 als auch vom Lenksäulenmodul 5 entkoppelt, sodass das Lenkrad 9 beliebig oft um seine Achse (d. h. die Achse der Lenkradwelle 8) drehbar ist. Zur Erzeugung eines Handmoments, welches eine Rückmeldung vom Lenkgetriebe 6 an das Lenkrad 9 wiedergibt, ist ein Force-Feedback-Aktuator M vorgesehen.

Das Lenksystem 1 umfasst ferner eine Steuerungseinheit 10, die zum automatisierten Durchführen eines Verfahrens der hierin dargelegten Art eingerichtet ist. Wie weiter oben ausführlich beschrieben, dient dieses Verfahren einer Lenkgetriebe-Lenkrad-Positionssynchronisation nach einem automatisierten Fahrt- oder Parkregime, bei dem das Lenkrad den gelenkten Fahrzeugrädern 7 nicht nachgeführt wurde. Hierzu werden der Steuerungseinheit 10 von geeigneten Fahrzeugkomponenten (wie Winkelsensoren eines im Lenkgetriebe eingesetzten Servomotors und des Force-Feedback-Aktuators M) beispielsweise laufend oder erst bei einer Synchronisations-Aufforderung jeweils aktuelle Werte einer der aktuellen Radstellung entsprechenden Lenkwinkelstellung des Lenkrads 9 einerseits und einer tatsächlichen Lenkwinkelstellung des Lenkrads 9 andererseits bereitgestellt. Der letztere Wert wird von dem ersteren Wert abgezogen, und aus der so ermittelten Differenz wird die zur Synchronisation auszuführende Lenkraddrehung erfindungsgemäß mit einer Periodizität gemäß einer vorbestimmten Lenkwinkelperiode, die einer vollen Lenkradumdrehung oder weniger entspricht, bestimmt. Anschließend wird die so bestimmte Lenkraddrehung des Lenkrads 9 ausgeführt, damit die Lenkung beispielsweise wieder an den Fahrer übergeben werden kann.

Figur 2 zeigt eine Gegenüberstellung einiger unterschiedlicher Möglichkeiten (n=1, 2, 4, 3 und ∞) für eine n-fache Rotationssymmetrie des Lenkrads 9 des Steer-by-Wire-Lenksystems 1 aus Fig. 1, in Draufsicht auf das Lenkrad 9 aus Fahrersicht (d. h. in der dem Fahrer zugewandten Lenkradebene). Wie in Fig. 2 eingezeichnet, kann das Lenkrad 9 in seiner dem Fahrer zugewandten Lenkradebene spiegelsymmetrisch bezüglich einer, zwei, drei oder unendlich vielen Symmetrieachsen A1, A2, A3... aufgebaut sein, was der oben genannten vorbestimmten Lenkwinkelperiode von 360°/2=180°, 360°/3=120°, 360°/4=90° bzw. 360°/∞=0°entspricht. Gemäß dem vorliegenden Verfahren muss das Lenkrad 9 bei seiner Positionssynchronisation mit den zuvor unabhängig gelenkten Fahrzeugrädern 7 nur um einen Winkel verstellt werden, der innerhalb der jeweiligen vorbestimmten Lenkwinkelperiode=360°/n liegt. Bei n=1 ist somit nicht mehr als eine volle Lenkraddrehung erforderlich, während bei n = ∞ gar keine Lenkraddrehung zur Synchronisation mehr nötig ist. Im letzteren Fall könnte es beispielsweise komplett auf Multifunktionstasten als Bedienungselemente verzichtet werden und ein beispielsweise kapazitiv ausgebildetes Lenkrad 9 eingesetzt werden, dass zusätzlich mit Gestensteuerung erweitert sein kann.

Wie Fig. 2 zeigt, sind auch unkonventionelle Lenkraddesigns mit ungeradzahliger Rotationssymmetrie wie n=3 sind vorliegend möglich, weil der Fahrer bei hochautomatisierten Fahrzeugen nicht ständig das Lenkrad 9 in der Hand hält, und ergonomische Gesichtspunkte gegenüber Designgesichtspunkten daher neu gewichtet werden können. Es ist aber auch eine konventionelle Lenkradarchitektur (n=1, also keine Symmetrie) möglich.

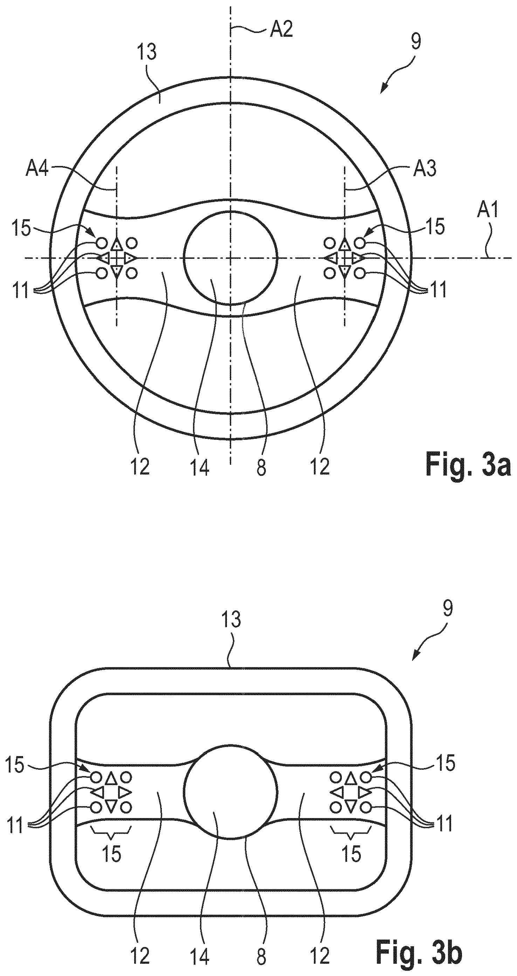

Figuren 3a bis 3c zeigen einige Beispiele für mögliche Anordnungen von Lenkradtasten 11 und ähnlichen Bedienelementen im Lenkrad 9 bei n=2, also 2-facher Rotationssymmetrie, was besonders bevorzugt sein kann, weil hierbei nur geringfügige Anpassungen an der aktuellen Lenkradarchitektur erforderlich sind. Dargestellt ist stets eine dem Fahrer zugewandte Lenkradebene. Das Lenkrad 9 weist in diesen Beispielen zwei um 180° periodisch angeordnete Stege 12 auf, die einen Lenkradkranz 13 mit der Lenkradwelle 8 bzw. einer Lenkradnabe verbinden. Radial innerhalb der Lenkradnabe kann optional ein bezüglich des Fahrzeugs 2 unbeweglicher mittiger Bereich 14 vorgesehen sein, in welchem elektrische/elektronische Einrichtungen wie Airbag, Hupe etc. oder wichtige Symbole oder Informationen dargestellt sein können, die beim Drehen des Lenkrads 9 nicht mitrotieren.

In Fig. 3a-3c weist das Lenkrad 9 zwei identische oder gleich ausgebildete Lenkradtasten-Gruppen 15 auf, die am jeweiligen Steg 12 angeordnet sind und mehrere Lenkradtasten 11 oder ähnliche Bedienelemente aufweisen. In Fig. 3a und 3b sind die Lenkradtasten 11 innerhalb der jeweiligen Gruppe 15 symmetrisch um je zwei zueinander senkrechte Symmetrieachsen A4, A5 ausgebildet, damit dem Fahrer eine gleichartige Bedienung zur Verfügung steht, wenn das Lenkrad 9 nach seiner Positionssynchronisierung innerhalb der Lenkwinkelperiode 360°/2=180° im Vergleich zu der herkömmlichen Lenkradstellung "auf dem Kopf steht". In Fig. 3a ist rein beispielhaft ein rundes Lenkrad 9 gezeigt. In Fig. 3b ist ein rechteckiges Lenkrad 9 gezeigt, das im Übrigen gleiche Eigenschaften wie rundes Lenkrad 9 der Fig. 3a haben kann, als rechteckiges Lenkrad 9 beispielsweise jedoch besser in die Instrumententafel 4 zu verfahren sein kann.

Das Lenkrad 9 der Fig. 3c unterscheidet sich von demjenigen der Fig. 3a nur dadurch, dass anstatt von Lenkradtasten 11 jede Lenkradtasten-Gruppe 15 als ein kapazitives Display ausgebildet ist, dessen Anzeige sich bei der Positionssynchronisation entsprechend ausrichtet, damit der Fahrer nach einer Drehung um die vorbestimmte Lenkwinkelperiode=180° wieder das Gleiche angezeigt bekommt. In diesem Beispiel können sich daher in den ansonsten identischen und symmetrischen Displays links und rechts jeweils unterschiedliche Anzeige- und Bedienelemente dargestellt werden, wie in der Fig. 3c an einem Beispiel veranschaulicht.

Das Lenkrad 9 der Fig. 4 unterscheidet sich von demjenigen der Fig. 3a nur dadurch, dass die vorbestimmte Lenkwinkelperiode nochmals halbiert ist, also statt 360°/2=180° nun 360°/4=90° beträgt. Entsprechend ist die Anzahl der Stege 12 und der Lenkradtasten-Gruppen 15 gegenüber Fig. 3a verdoppelt worden, und diese sind symmetrisch in einem Winkelabstand von 90° zueinander um die Lenkradachse herum angeordnet. Im Übrigen gilt das für Fig. 3a Dargelegte auch hier sinngemäß genauso.

### Bezugszeichenliste

- 1.: Lenksystem, auch Steer-by-Wire-Lenksystem genannt
- 2.: Fahrzeug, auch Steer-by-Wire-Fahrzeug genannt
- 3.: Fahrersitz
- 4.: Instrumententafel
- 5.: Lenksäulenmodul
- 6.: Lenkgetriebe
- 7.: Fahrzeugräder, auch einfach Räder genannt
- 8.: Lenkradwelle
- 9.: Lenkrad
- 10.: Steuerungseinheit
- 11.: Lenkradtasten
- 12.: Stege
- 13.: Lenkradkranz
- 14.: unbeweglicher mittiger Bereich
- 15.: Lenkradtasten-Gruppe
- M.: Force-Feedback-Aktuator
- Ai.: i-te Symmetrieachse

## Patentansprüche

1. Verfahren zu einer Lenkgetriebe-Lenkrad-Positionssynchronisation in einem Steer-by-Wire-Fahrzeug (2) mit einem von einem Lenkgetriebe (6) mechanisch entkoppelten Lenkrad (9), das beliebig oft um seine Achse drehbar ist, und einem Force-Feedback-Aktuator (M), der zur Erzeugung eines Handmoments, welches eine Rückmeldung vom Lenkgetriebe (6) an das Lenkrad (9) wiedergibt, ausgebildet ist, umfassend die Schritte:
- Erhalten einer Aufforderung zu einer Lenkgetriebe-Lenkrad-Positionssynchronisation nach einem automatisierten Fahrt- oder Parkregime, bei dem das Lenkrad (9) dem Lenkgetriebe (6) nicht nachgeführt wurde;
- Bereitstellen aktueller Werte einer dem Lenkgetriebe (6) entsprechenden Lenkwinkelstellung des Lenkrads (9) einerseits und einer tatsächlichen Lenkwinkelstellung des Lenkrads (9) andererseits und Ermitteln einer Differenz dieser Werte;
- Bestimmen einer zur Lenkgetriebe-Lenkrad-Positionssynchronisation auszuführenden Lenkraddrehung aus der ermittelten Differenz unter Berücksichtigung einer vorbestimmten Lenkwinkelperiode, die einer vollen Lenkradumdrehung oder weniger entspricht; und
- Ausführen der so bestimmten Lenkraddrehung,
**dadurch gekennzeichnet, dass** das Lenkrad (9) um dessen Drehachse im Wesentlichen eine n-fache Rotationssymmetrie besitzt, sodass die vorbestimmte Lenkwinkelperiode 360°/n beträgt, wobei n>1 eine ganze Zahl ist, wobei das Lenkrad (9) eine Anzahl von n untereinander identisch ausgebildeten Lenkradtasten-Gruppen (15) aufweist, die in einem Winkelabstand von jeweils 360°/n voneinander um die Lenkradachse herum angeordnet sind; und jede von diesen Lenkradtasten-Gruppen (15) in einer dem Fahrer zugewandten Lenkradebene spiegelsymmetrisch um zwei zueinander senkrechte Symmetrieachsen (A1, A2, A3, A4, ...) ausgebildet ist und/oder mindestens ein kapazitives Display oder Touchscreen umfasst, dessen als beschriftete oder unsymmetrische Lenkradtasten (11) dienende Anzeige bei der Lenkgetriebe-Lenkrad-Positionssynchronisation abhängig von der daraus resultierenden Position des jeweiligen Displays/Touchscreens in der Lenkradebene so angepasst wird, dass eine vorgegebene Ausrichtung für links/rechts und oben/unten bezüglich der Lenkradachse angezeigte Lenkradtasten (11) gewahrt ist.

2. Verfahren nach Anspruch 1, wobei bei der Bestimmung der zur Lenkgetriebe-Lenkrad-Positionssynchronisation auszuführenden Lenkraddrehung
- die vorbestimmte Lenkwinkelperiode so oft von der ermittelten Differenz abgezogen wird, bis zwei mögliche Lenkraddrehungen mit einem Betrag innerhalb der vorbestimmten Lenkwinkelperiode und mit unterschiedlichem Drehsinn ermittelt sind; und
- von diesen zwei möglichen Lenkraddrehungen diejenige mit dem kleinsten Betrag als die auszuführende Lenkraddrehung bestimmt wird.

3. Verfahren nach Anspruch 1 oder 2, wobei
- das Lenkrad (9) oder eine drehfest damit verbundene Lenkradwelle (8) beliebig oft drehbar gelagert ist in einem Lenksäulenmodul (5), welches im Fahrzeug (2) unbeweglich angeordnet und gegebenenfalls zur individuellen Anpassung an einen Fahrer in einer oder mehreren Richtungen als Ganzes verstellbar ist;
- im Lenkrad (9) mindestens eine elektrische oder elektronische Einrichtung integriert ist; und
- das Fahrzeug (2) zu einer drahtlosen Energie- und/oder Signalübertragung zwischen unbeweglichen Fahrzeugkomponenten und der mindestens einen im Lenkrad (9) integrierten Einrichtung ausgebildet ist, insbesondere indem das Fahrzeug (2) einen Transformator oder eine sonstige Vorrichtung zur drahtlosen Energie- und/oder Signalübertragung zwischen dem unbeweglichen Lenksäulenmodul (5) und der mindestens einen im Lenkrad (9) integrierten Einrichtung aufweist.

4. Verfahren nach Anspruch 3, wobei die mindestens eine elektrische oder elektronische Einrichtung einen oder mehrere von folgenden elektrischen Verbrauchern umfasst:
- eine Lenkradheizung und/oder einen anderen großen Verbraucher, der einen elektrischen Verbrauch von mindestens etwa 30 W, vorzugsweise mindestens etwa 40 W, besonders bevorzugt mindestens etwa 50 W aufweist;
- eine oder mehrere Lenkradtasten (11) zur Bedienung des Fahrzeugs (2) oder eines darin integrierten Infotainment-Systems;
- einen kapazitiven Hands-Off-Erkennungssensor, der zum Erkennen, ob die Hände des Fahrers nicht am Lenkrad (9) sind, ausgebildet ist;
- einen Airbag;
- einen Aktuator, der zum Auf- und Zusammenklappen des Lenkrads (9) ausgebildet ist.

5. Verfahren nach einem der vorhergehenden Ansprüche, wobei
- der aktuelle Wert der tatsächlichen Lenkwinkelstellung des Lenkrads (9) durch einen Rotorpositionssensor des Force-Feedback-Aktuators (M) bereitgestellt wird; und/oder
- der aktuelle Wert der dem Lenkgetriebe (6) entsprechenden Lenkwinkelstellung des Lenkrads (9) durch einen Rotorpositionssensor eines Servomotors, der im Lenkgetriebe (6) zur (Räder-)Lenkung eingesetzt ist, bereitgestellt wird.

6. Computerprogramm, umfassend Befehle, die bei der Ausführung des Computerprogramms in einer Steuerungseinheit (10) diese veranlassen, das Verfahren nach einem der vorhergehenden Ansprüche auszuführen.

7. Steuerungseinheit (10), die dazu eingerichtet ist, das Verfahren nach einem der Ansprüche 1 bis 5 automatisch auszuführen.

8. Steer-by-Wire-Lenksystem (1) für ein Fahrzeug (2), insbesondere ein Kraftfahrzeug, umfassend:
- ein Lenksäulenmodul (5), das für eine unbewegliche Anordnung im Fahrzeug (2) ausgelegt ist und zur individuellen Anpassung an den Fahrer in einer oder mehreren Richtungen als Ganzes verstellbar sein kann;
- ein Lenkgetriebe (6), das zum Verstellen oder Drehen von Fahrzeugkomponenten ausgebildet ist, welche die Fortbewegungsrichtung des Fahrzeugs (2) bestimmen;
- eine im Lenksäulenmodul (6) gelagerte Lenkradwelle (8) mit einem drehfest daran befestigten Lenkrad (9), dessen Drehbewegung mechanisch sowohl vom Lenkgetriebe (6) als auch vom Lenksäulenmodul (5) entkoppelt ist;
- einen Force-Feedback-Aktuator (M), der zur Erzeugung eines Handmoments, welches eine Rückmeldung vom Lenkgetriebe (6) an das Lenkrad (9) wiedergibt, ausgebildet ist; sowie
- eine Steuerungseinheit (10) nach Anspruch 7,
- wobei das Lenkrad (9) um dessen Drehachse im Wesentlichen eine n-fache Rotationssymmetrie besitzt, sodass die vorbestimmte Lenkwinkelperiode 360°/n beträgt, wobei n>1 eine ganze Zahl ist, wobei
- das Lenkrad (9) eine Anzahl von n untereinander identisch ausgebildeten Lenkradtasten-Gruppen (15) aufweist, die in einem Winkelabstand von jeweils 360°/n voneinander um die Lenkradachse herum angeordnet sind; und
- jede von diesen Lenkradtasten-Gruppen (15) in einer dem Fahrer zugewandten Lenkradebene spiegelsymmetrisch um zwei zueinander senkrechte Symmetrieachsen (A1, A2, A3, A4, ...) ausgebildet ist und/oder mindestens ein kapazitives Display oder Touchscreen umfasst, dessen als beschriftete oder unsymmetrische Lenkradtasten (11) dienende Anzeige bei der Lenkgetriebe-Lenkrad-Positionssynchronisation abhängig von der daraus resultierenden Position des jeweiligen Displays/Touchscreens in der Lenkradebene so angepasst wird, dass eine vorgegebene Ausrichtung für links/rechts und oben/unten bezüglich der Lenkradachse angezeigte Lenkradtasten (11) gewahrt ist.

9. Fahrzeug (2), insbesondere ein Kraftfahrzeug, umfassend:
- einen Fahrersitz (3) und eine davor angeordnete Instrumententafel (4);
- ein Steer-by-Wire-Lenksystem (1) nach Anspruch 8, dessen Lenksäulenmodul (5) im Bereich der Instrumententafel (4) fixiert ist;
- wobei das Lenksäulenmodul (5) vorzugsweise zur individuellen Anpassung an einen Fahrer als Ganzes verstellbar ist in axialer Richtung der Lenkradwelle (8), um das Lenkrad (9) an die Sitzposition des Fahrers in einer Längsrichtung des Fahrzeugs (2) anzupassen, und/oder in vertikaler Richtung des Fahrzeugs (2) zur Anpassung an die Sitzhöhe und Größe des Fahrers.

## Claims

1. Method for steering gear-steering wheel position synchronization in a steer-by-wire vehicle (2) having a steering wheel (9) which is mechanically decoupled from a steering gear (6) and which can be rotated any number of times about its axis, and having a force feedback actuator (M) which is configured to generate a hand torque which provides feedback from the steering gear (6) to the steering wheel (9), comprising the steps of:
- receiving a request for steering gear-steering wheel position synchronization according to an automated driving or parking regime in which the steering wheel (9) was not adjusted to the steering gear (6);
- providing current values of a steering angle position of the steering wheel (9) corresponding to the steering gear (6) on the one hand and an actual steering angle position of the steering wheel (9) on the other hand and ascertaining a difference between these values;
- determining a steering wheel rotation to be performed for the steering gear-steering wheel position synchronization from the ascertained difference, taking into account a predetermined steering angle period which corresponds to a full steering wheel rotation or less; and
- performing the steering wheel rotation determined in this way,
**characterized in that**
the steering wheel (9) has substantially n-fold rotational symmetry about its axis of rotation such that the predetermined steering angle period is 360°/n, where n>1 is an integer, the steering wheel (9) having a number of n identical steering wheel button groups (15) which are arranged at an angular distance of 360°/n from one other about the steering wheel axis; and each of these steering wheel button groups (15) is mirror-symmetrical about two mutually perpendicular axes of symmetry (A1, A2, A3, A4, ...) in a steering wheel plane facing the driver and/or comprises at least one capacitive display or touchscreen, the display of which, serving as labeled or asymmetrical steering wheel buttons (11), is adapted during the steering gear-steering wheel position synchronization on the basis of the resulting position of the relevant display/touchscreen in the steering wheel plane, so that a predetermined orientation for steering wheel buttons (11) displayed as left/right and up/down with respect to the steering wheel axis is maintained.

2. Method according to claim 1, wherein when determining the steering wheel rotation to be performed for the steering gear-steering wheel position synchronization,
- the predetermined steering angle period is subtracted from the ascertained difference repeatedly until two possible steering wheel rotations with an amount within the predetermined steering angle period and with different directions of rotation are ascertained; and
- of these two possible steering wheel rotations, the one with the smallest amount is determined as the steering wheel rotation to be performed.

3. Method according to claim 1 or claim 2, wherein
- the steering wheel (9) or a steering wheel shaft (8) connected thereto for conjoint rotation is mounted, so as to be rotatable any number of times, in a steering column module (5) which is fixed in the vehicle (2) and, if necessary, can be adjusted as a whole in one or more directions for individual adaptation to a driver;
- at least one electrical or electronic device is integrated into the steering wheel (9); and
- the vehicle (2) is designed for wireless power and/or signal transmission between fixed vehicle components and the at least one device integrated into the steering wheel (9), in particular in that the vehicle (2) has a transformer or other apparatus for wireless power and/or signal transmission between the fixed steering column module (5) and the at least one device integrated into the steering wheel (9).

4. Method according to claim 3, wherein the at least one electrical or electronic device comprises one or more of the following electrical consumers:
- a steering wheel heater and/or another large consumer having an electrical consumption of at least approximately 30 W, preferably at least approximately 40 W, particularly preferably at least approximately 50 W;
- one or more steering wheel buttons (11) for operating the vehicle (2) or an infotainment system integrated therein;
- a capacitive hands-off detection sensor which is designed to detect whether the driver's hands are not on the steering wheel (9);
- an airbag;
- an actuator which is designed to fold and unfold the steering wheel (9).

5. Method according to any of the preceding claims, wherein
- the current value of the actual steering angle position of the steering wheel (9) is provided by a rotor position sensor of the force feedback actuator (M); and/or
- the current value of the steering angle position of the steering wheel (9) corresponding to the steering gear (6) is provided by a rotor position sensor of a servo motor which is used in the steering gear (6) for steering (wheels).

6. Computer program comprising commands which, when the computer program is performed in a control unit (10), cause the control unit to perform the method according to any of the preceding claims.

7. Control unit (10) which is designed to automatically perform the method according to any of claims 1 to 5.

8. Steer-by-wire steering system (1) for a vehicle (2), in particular a motor vehicle, comprising:
- a steering column module (5) which is designed to be fixed in the vehicle (2) and can be adjusted as a whole in one or more directions for individual adaptation to the driver;
- a steering gear (6) which is designed to adjust or rotate vehicle components which determine the direction of movement of the vehicle (2);
- a steering wheel shaft (8) which is mounted in the steering column module (6) and has a steering wheel (9) which is attached thereto for conjoint rotation and of which the rotational movement is mechanically decoupled from both the steering gear (6) and the steering column module (5);
- a force feedback actuator (M) which is designed to generate a hand torque which provides feedback from the steering gear (6) to the steering wheel (9); and
- a control unit (10) according to claim 7,
- wherein the steering wheel (9) has substantially n-fold rotational symmetry about its axis of rotation such that the predetermined steering angle period is 360°/n, where n>1 is an integer, wherein
- the steering wheel (9) has a number of n identical steering wheel button groups (15) which are arranged at an angular distance of 360°/n from one other about the steering wheel axis; and
- each of these steering wheel button groups (15) is mirror-symmetrical about two mutually perpendicular axes of symmetry (A1, A2, A3, A4, ...) in a steering wheel plane facing the driver and/or comprises at least one capacitive display or touchscreen, the display of which, serving as labeled or asymmetrical steering wheel buttons (11), is adapted during the steering gear-steering wheel position synchronization on the basis of the resulting position of the relevant display/touchscreen in the steering wheel plane, so that a predetermined orientation for steering wheel buttons (11) displayed as left/right and up/down with respect to the steering wheel axis is maintained.

9. Vehicle (2), in particular a motor vehicle, comprising:
- a driver's seat (3) and an instrument panel (4) arranged in front of it;
- a steer-by-wire steering system (1) according to claim 8, the steering column module (5) of which is secured in the region of the instrument panel (4);
- wherein the steering column module (5) can preferably be adjusted, for individual adaptation to a driver, as a whole in the axial direction of the steering wheel shaft (8) to adapt the steering wheel (9) to the driver's seating position in a longitudinal direction of the vehicle (2), and/or in the vertical direction of the vehicle (2) to adapt to the seat height and the height of the driver.

## Revendications

1. Procédé pour une synchronisation de position de mécanisme de direction et de volant de direction dans un véhicule à commande électrique (2) comportant un volant de direction (9) découplé mécaniquement d'un mécanisme de direction (6), qui peut tourner autour de son axe un nombre quelconque de fois, et un actionneur à rétroaction de force (M) qui est conçu pour générer un couple manuel qui reproduit une rétroaction du mécanisme de direction (6) vers le volant de direction (9), comprenant les étapes suivantes :
- réception d'une demande de synchronisation de position de mécanisme de direction et de volant de direction après un régime de conduite ou de stationnement automatisé dans lequel le volant de direction (9) n'a pas suivi le mécanisme de direction (6) ;
- mise à disposition de valeurs actuelles d'une position angulaire de direction du volant de direction (9) correspondant au mécanisme de direction (6) d'une part et d'une position angulaire de direction effective du volant de direction (9) d'autre part et établissement d'une différence entre ces valeurs ;
- détermination d'une rotation de volant de direction à exécuter pour la synchronisation de position de mécanisme de direction et de volant de direction à partir de la différence établie en tenant compte d'une période d'angle de direction prédéterminée qui correspond à un tour complet du volant de direction ou moins ; et
- exécution de la rotation de volant de direction ainsi déterminée,
**caractérisé en ce que** le volant de direction (9) a une symétrie de rotation de sensiblement n fois autour de son axe de rotation, de sorte que la période d'angle de direction prédéterminée est de 360°/n, dans lequel n>1 est un nombre entier, dans lequel le volant de direction (9) présente un nombre de n groupes de touches de volant de direction (15) réalisés identiques les uns aux autres, qui sont agencés autour de l'axe de volant de direction à une distance angulaire de respectivement 360°/n les uns des autres ; et chacun de ces groupes de touches de volant de direction (15) est symétrique en miroir par rapport à deux axes de symétrie (A1, A2, A3, A4, ...) perpendiculaires les uns aux autres dans un plan de volant de direction tourné vers le conducteur et/ou comprend au moins un affichage capacitif ou écran tactile dont l'affichage servant de touches de volant de direction (11) marquées ou asymétriques est adapté, lors de la synchronisation de position de mécanisme de direction et de volant de direction, en fonction de la position qui en résulte de l'affichage/de l'écran tactile respectif dans le plan de volant de direction, de telle sorte qu'une orientation prédéfinie pour des touches de volant de direction (11) affichées à gauche/à droite et en haut/en bas par rapport à l'axe de volant de direction est conservée.

2. Procédé selon la revendication 1, dans lequel, lors de la détermination de la rotation de volant de direction à exécuter pour la synchronisation de position de mécanisme de direction et de volant de direction
- la période d'angle de direction prédéterminée est soustraite de la différence établie jusqu'à ce que deux rotations de volant de direction possibles d'une valeur comprise dans la période d'angle de direction prédéterminée et ayant un sens de rotation différent soient établies ; et
- parmi ces deux rotations de volant de direction possibles, celle dont la valeur est la plus faible est déterminée comme étant la rotation de volant de direction à exécuter.

3. Procédé selon la revendication 1 ou 2, dans lequel
- le volant de direction (9) ou un arbre de volant de direction (8) relié à celui-ci de manière solidaire en rotation est logé de manière à pouvoir tourner un nombre quelconque de fois dans un module de colonne de direction (5) qui est agencé de manière immobile dans le véhicule (2) et qui peut le cas échéant être réglé dans une ou plusieurs directions dans son ensemble pour une adaptation individuelle à un conducteur ;
- au moins un dispositif électrique ou électronique est intégré dans le volant de direction (9) ; et
- le véhicule (2) est réalisé pour une transmission sans fil d'énergie et/ou de signaux entre des composants de véhicule immobiles et l'au moins un dispositif intégré dans le volant de direction (9), en particulier en ce que le véhicule (2) présente un transformateur ou un autre équipement pour la transmission sans fil d'énergie et/ou de signaux entre le module de colonne de direction (5) immobile et l'au moins un dispositif intégré dans le volant de direction (9).

4. Procédé selon la revendication 3, dans lequel l'au moins un dispositif électrique ou électronique comprend un ou plusieurs des consommateurs électriques suivants :
- un chauffage de volant de direction et/ou un autre grand consommateur qui présente une consommation électrique d'au moins environ 30 W, de préférence d'au moins environ 40 W, de manière particulièrement préférée d'au moins environ 50 W ;
- une ou plusieurs touches de volant de direction (11) pour actionner le véhicule (2) ou un système d'infodivertissement intégré dans celui-ci ;
- un capteur de reconnaissance capacitif d'absence d'intervention manuelle, qui est réalisé pour reconnaître si les mains du conducteur ne sont pas sur le volant de direction (9) ;
- un coussin de sécurité gonflable ;
- un actionneur qui est réalisé pour déployer et replier le volant de direction (9).

5. Procédé selon l'une des revendications précédentes, dans lequel
- la valeur actuelle de la position angulaire de direction effective du volant de direction (9) est mise à disposition par un capteur de position de rotor de l'actionneur à rétroaction d'effort (M) ; et/ou
- la valeur actuelle de la position angulaire de direction du volant de direction (9) correspondant au mécanisme de direction (6) est mise à disposition par un capteur de position de rotor d'un servomoteur qui est utilisé dans le mécanisme de direction (6) pour la direction (des roues).

6. Programme informatique, comprenant des instructions qui, lorsque le programme informatique est exécuté dans une unité de commande (10), amènent celle-ci à exécuter le procédé selon l'une des revendications précédentes.

7. Unité de commande (10), qui est réalisée pour exécuter automatiquement le procédé selon l'une des revendications 1 à 5.

8. Système de direction à commande électrique (1) pour un véhicule (2), en particulier un véhicule automobile, comprenant :
- un module de colonne de direction (5) qui est réalisé pour être agencé de manière immobile dans le véhicule (2) et qui peut être réglé dans son ensemble dans une ou plusieurs directions pour une adaptation individuelle au conducteur ;
- un mécanisme de direction (6) qui est réalisé pour régler ou faire tourner des composants de véhicule qui déterminent la direction de déplacement vers l'avant du véhicule (2) ;
- un arbre de volant de direction (8) monté dans le module de colonne de direction (6) avec un volant de direction (9) qui y est fixé de manière solidaire en rotation et dont le mouvement de rotation est découplé mécaniquement aussi bien du mécanisme de direction (6) que du module de colonne de direction (5) ;
- un actionneur à rétroaction de force (M) qui est réalisé pour générer un couple manuel qui reproduit une rétroaction du mécanisme de direction (6) vers le volant de direction (9) ; ainsi que
- une unité de commande (10) selon la revendication 7,
- dans lequel le volant de direction (9) possède sensiblement une symétrie de rotation de n fois autour de son axe de rotation, de sorte que la période d'angle de direction prédéterminée est de 360°/n, dans lequel n>1 est un nombre entier, dans lequel
- le volant de direction (9) présente un nombre de n groupes de touches de volant de direction (15) réalisés de manière identique les uns aux autres, qui sont agencés autour de l'axe de volant de direction à une distance angulaire de respectivement 360°/n les uns des autres ; et
- chacun de ces groupes de touches de volant de direction (15) est symétrique en miroir par rapport à deux axes de symétrie (A1, A2, A3, A4, ...) perpendiculaires entre eux dans un plan de volant de direction tourné vers le conducteur et/ou comprend au moins un affichage capacitif ou écran tactile dont l'affichage servant de touches de volant de direction (11) marquées ou asymétriques est adapté, lors de la synchronisation de position de mécanisme de direction et de volant de direction, en fonction de la position qui en résulte de l'affichage/de l'écran tactile respectif dans le plan de volant de direction, de telle sorte qu'une orientation prédéfinie pour des touches de volant de direction (11) affichées à gauche/à droite et en haut/en bas par rapport à l'axe de volant de direction est conservée.

9. Véhicule (2), en particulier un véhicule automobile, comprenant :
- un siège de conducteur (3) et un tableau de bord (4) agencé devant celui-ci ;
- un système de direction à commande électrique (1) selon la revendication 8, dont le module de colonne de direction (5) est fixé dans la zone du tableau de bord (4) ;
- dans lequel le module de colonne de direction (5) est réglable, de préférence pour une adaptation individuelle à un conducteur, dans son ensemble, dans la direction axiale de l'arbre de volant de direction (8), afin d'adapter le volant de direction (9) à la position assise du conducteur dans une direction longitudinale du véhicule (2), et/ou dans la direction verticale du véhicule (2), afin de s'adapter à la hauteur de siège et à la taille du conducteur.
